# EUROPÄISCHE PATENTSCHRIFT

(11) **EP 3 809 099 B1**
(45) Veröffentlichungstag und Bekanntmachung des Hinweises auf die Patenterteilung: **15.03.2023**
(21) Anmeldenummer: 19203603.6
(22) Anmeldetag: 16.10.2019
(51) Int. Cl.: G01D 5/14, F15B 15/28, G01P 3/52

(54) **LÄNGEN- UND GESCHWINDIGKEITSMESSUNG AUF HYDRAULISCHEN, PNEUMATISCHEN UND ELEKTRISCHEN ZYLINDERN FÜR MOBILE UND STATIONÄRE ANWENDUNGEN**
STROKE AND VELOCITY MEASUREMENT ON HYDRAULIC, PNEUMATIC AND ELECTRIC CYLINDERS FOR MOBILE AND STATIONARY APPLICATIONS
MESURE DE LA COURSE ET DE LA VITESSE SUR DES CYLINDRES HYDRAULIQUES, PNEUMATIQUES ET ÉLECTRIQUES POUR DES APPLICATIONS MOBILES ET FIXES

(43) Veröffentlichungstag der Anmeldung: 21.04.2021
(73) Patentinhaber: NCTE AG, 82041 Oberhaching (DE)
(72) Erfinder: Eckschlager, Florian, 85521 Riemerling (DE); Merold, Franz, 82064 Staßlach (DE); Shauchuk, Raman, 87781 Ungerhausen (DE); Pippes, Thomas, 19065 Pinnow (DE)
(74) Vertreter: Grünecker Patent- und Rechtsanwälte PartG mbB

(56) Entgegenhaltungen:
- EP-A1- 3 557 188
- EP-A2- 1 821 072
- DE-A1- 2 933 557
- DE-A1- 2 945 895
- DE-A1-102009 041 626
- US-A1- 2013 076 346

## Beschreibung

### Gebiet der Erfindung

Die Erfindung betrifft ein System mit einem Arbeitszylinder und einer Kolbenstange, wobei das System für die Positions- und/oder Geschwindigkeitsmessung der Kolbenstange in Bezug auf den Arbeitszylinder bei hydraulischen, pneumatischen oder elektrischen Zylindern geeignet ist.

### Stand der Technik

Gemäß Stand der Technik gibt es zur Messung der Position von beweglichen Maschinenteilen verschiedene Verfahren, die z.B. auf Widerstandsänderungen bei Potentiometern oder Dehnungsmessstreifen, variabler Induktivität bei einem induktiven Sensor oder variabler Kapazität bei einem kapazitiven Sensor beruhen. Diese Verfahren sind jedoch je nach Anwendungsgebiet nicht ausreichend zuverlässig.

Eine weitere Möglichkeit besteht im Zählen von Pulsen, wie es in einem Inkrementalgeber realisiert ist. Solche Inkrementalgeber mit einer periodischen Maßverkörperung können auf optischen oder magnetischen Messungen beruhen. Nachteilig ist bei solchen magnetisch basierten inkrementellen Weggebern, dass die magnetische Kodierung beispielsweise einer Kolbenstange aufwändig ist.

Derzeit am Markt verfügbar sind Systeme, die zur Längenmessung an hydraulisch, pneumatisch oder elektrisch betätigten Zylindern unter anderem in Kolben eingebrachte Magnetbänder, oder aufgebrachten Kodierungen verwenden. Weitere Systeme arbeiten mit der Laufzeiterfassung eines magnetischen Impulses. Nachteil der genannten Systeme ist die notwendige konstruktive Modifikation der Zylinderbaugruppe oder die Komplexität des Messverfahrens und der erforderlichen Komponenten.

In der Europäischen Patentanmeldung 18 167 700.6 der NCTE AG (Stand der Technik im Sinne von Artikel 54(3) EPÜ) wird eine Vorrichtung zur Positionsmessung mit einer magnetisierten Stange und ein Verfahren zur Herstellung der magnetisierten Stange beschrieben. Die magnetisierte Stange weist ein außerhalb der Stange messbares Magnetfeld auf, wobei eine radiale Komponente des Magnetfelds der Stange innerhalb eines axialen Bereichs der Stange in Abhängigkeit von der axialen Position einen von Null verschiedenen, insbesondere einen konstanten Gradienten aufweist.

EP 1 821 072 A2 offenbart eine Vorrichtung zur Erfassung der Axialposition eines Körpers, wobei in einem Arbeitszylinder ein mit einer Kolbenstange versehener Kolben axial verschiebbar geführt ist. Die Kolbenstange trägt an einer Stelle ihres Außenumfangs in der Längsrichtung eine langgestreckte Permanentmagnetanordnung, die aus einer Vielzahl von aneinandergereihten Magneten besteht. DE 29 45 895 A1 offenbart ein magnetisches Längenmesssystem zum Messen der Position von Hydraulik- und Pneumatikzylindern.

### Beschreibung der Erfindung

Der Erfindung liegt die Aufgabe zugrunde, die genannten Nachteile zumindest teilweise auszuräumen.

Diese Aufgabe wird durch ein System nach Anspruch 1 gelöst.

Erfindungsgemäß wird eine permanente Magnetisierung der Kolbenstange des Arbeitszylinders und eine Messeinheit zur Messung des Magnetfelds bereitgestellt. Auf diese Weise kann ein bestehender Arbeitszylinder mit einer Kolbenstange einfach modifiziert werden, ohne wesentliche konstruktive Änderungen am Arbeitszylinder selbst vornehmen zu müssen.

Die radiale Komponente des Magnetfeldes ist durch Betrag und Richtung (bzw. Vorzeichen) definiert. Ein von Null verschiedener Gradient (also ein streng monotoner Verlauf der radialen Magnetfeldkomponente in Abhängigkeit von der axialen Position) ist somit auch dann gegeben, wenn z.B. die radiale Komponente an einer axialen Position mit einem bestimmten Betrag (Stärke des Magnetfeldes) radial nach außen zeigt, und sich in axialer Richtung zunächst der Betrag des radialen Magnetfeldes verringert und dann mit einem Nulldurchgang des Betrags eine Richtungsumkehr des Magnetfeldes erfolgt, so dass sich bei weiterem Voranschreiten in axialer Richtung der Betrag des radialen Magnetfeldes wieder erhöht, jedoch die Richtung der radialen Magnetfeldkomponente nach innen zeigt (in Richtung der Achse der Kolbenstange).

Im Falle eines konstanten Gradienten besteht ein einfacher linearer Zusammenhang zwischen der radialen Magnetfeldkomponente und der axialen Position.

Erfindungsgemäß kann auf diese Weise eine umkehrbar eindeutige Zuordnung zwischen der radialen Komponente des Magnetfeldes und der axialen Position erfolgen.

Der Betrag der radialen Magnetfeldkomponente in dem axialen Bereich der Stange (und in einem vorbestimmten senkrechten Abstand von der Stange) liegt dabei in einem Bereich, in dem ein Magnetfeldsensor ein mit dem Betrag der radialen Magnetfeldkomponente variierendes Sensorsignal ausgeben kann, also in einem Messbereich eines Magnetfeldsensors.

Das erfindungsgemäße System kann wie folgt weitergebildet werden.

Die Messeinheit kann zur Messung der radialen Magnetfeldkomponente eines außerhalb des Arbeitszylinders befindlichen Teils des axialen Bereichs der Kolbenstange vorgesehen sein, wobei die Messung insbesondere in einem vorbestimmten axialen Abstand von dem Arbeitszylinder erfolgen kann. Es wird somit das Magnetfeld eines Teils der Kolbenstange gemessen, das sich außerhalb des Arbeitszylinders befindet. Dadurch wird eine mögliche Verfälschung der Messung durch einen temporär durch das Magnetfeld der Kolbenstange magnetisierten Bereich des Materials des Arbeitszylinders vermieden. Das kann noch dadurch verbessert werden, dass die Messung in einem vorbestimmten Abstand (Mindestabstand) vom Arbeitszylinder (Endbereich des Arbeitszylinders) erfolgt.

Die Messeinheit kann an einem Endbereich des Arbeitszylinders, an dem die Kolbenstange aus dem Arbeitszylinder hervorsteht angeordnet sein. Dies erlaubt einen einfachen und kompakten Aufbau.

Dabei kann die Messeinheit als Zusatzmodul ausgebildet sein, das an dem Endbereich des Arbeitszylinders montierbar ist, insbesondere auf den Arbeitszylinder aufsteckbar und/oder mit dem Arbeitszylinder verschraubbar ist.

Der Arbeitszylinder kann ein Hydraulikzylinder, ein Pneumatikzylinder oder ein Elektrozylinder sein.

Die Messeinheit kann weiterhin zur Bestimmung einer axialen Lage der Kolbenstange relativ zum Arbeitszylinder und/oder zur Bestimmung einer Geschwindigkeit der Kolbenstange relativ zum Arbeitszylinder ausgebildet sein.

Das System kann eine Auswerteeinheit umfassen, die Auswerteeinheit dazu ausgebildet ist, aus Messsignalen von der Messeinheit eine axiale Lage der Kolbenstange relativ zum Arbeitszylinder und/oder eine Geschwindigkeit der Kolbenstange relativ zum Arbeitszylinder zu bestimmen, wobei die Auswerteeinheit und die Messeinheit kommunikativ miteinander gekoppelt, insbesondere verdrahtet oder drahtlos verbunden sein können.

Die radiale Magnetfeldkomponente kann in Abhängigkeit von der Position in Umfangsrichtung um die Kolbenstange bei einem konstanten radialen Abstand von der Kolbenstange konstant sein.

Die Messeinheit kann wenigstens einen Magnetfeldsensor zur Ausgabe eines von der radialen Magnetfeldkomponente abhängenden Signals umfassen.

Dabei kann jeder Magnetfeldsensor eine elektrische Messspule umfassen, die in einem elektrischen Schwingkreis verschaltet ist. Alternativ dazu können auch andere magnetoresistive Sensorelemente verwendet werden, wie beispielsweise GMR- (giant magnetoresistance), TMR- (tunnel magnetoresistance), oder AMR- (anisotropic magnetoresistance) Sensoren.

Die Messeinheit kann eine Anzahl N von Magnetfeldsensoren in einem gleichmäßigen Winkelabstand von 360°/N um die Kolbenstange aufweisen, wobei insbesondere zwei Magnetfeldsensoren in Bezug auf die Achse der Kolbenstange gegenüberliegend angeordnet sein können oder vier Magnetfeldsensoren in einem jeweiligen Winkelabstand von 90° in Umfangsrichtung der Kolbenstange angeordnet sein können, wobei vorzugsweise der radiale Abstand der einzelnen Magnetfeldsensoren von der Kolbenstange für alle Magnetfeldsensoren gleich ist.

Die Messeinheit kann dahingehend weitergebildet werden, dass die Magnetfeldsensoren so miteinander verschaltet sein können, dass sich die ausgegebenen Signale aufgrund der jeweils gemessenen radialen Magnetfeldkomponenten addieren. Alternativ oder zusätzlich können die Magnetfeldsensoren so miteinander verschaltet sein, dass bei einer Bewegung der Kolbenstange zwei gegenläufige Signale ausgegeben werden, so dass bei einer Bewegung der Kolbenstange in eine erste Richtung ein erstes Signal größer wird und ein zweites Signal kleiner wird bzw. bei einer Bewegung in eine zweite Richtung, die der ersten Richtung entgegengesetzt ist, das erste Signal kleiner wird und das zweite Signal größer wird.

Die oben genannte Aufgabe wir ebenfalls gelöst durch eine erfindungsgemäße Verwendung des erfindungsgemäßen Systems oder einer der genannten Weiterbildungen, wobei die Verwendung umfasst: Positionieren, Heben, Senken oder Verschieben von Lasten; Bestimmen eines Lenkwinkels in einem Fahrzeug, wobei der Arbeitszylinder ein Lenkzylinder des Fahrzeugs ist; Verwendung in einer stationären oder einer mobilen Vorrichtung.

Die oben genannte Aufgabe wir ebenfalls gelöst durch ein Verfahren zum Bereitstellen eines erfindungsgemäßen Systems oder einer der genannten Weiterbildungen, wobei das Verfahren die folgenden Schritte umfasst: Modifizieren eines Arbeitszylinders mit einer Kolbenstange, um eine Bestimmung einer axialen Lage der Kolbenstange relativ zum Arbeitszylinder und/oder eine Bestimmung einer Geschwindigkeit der Kolbenstange relativ zum Arbeitszylinder bereitzustellen. Dabei umfasst das Modifizieren des Arbeitszylinders mit der Kolbenstange die folgenden Schritte: Magnetisieren der Kolbenstange mit einem permanenten Magnetfeld innerhalb eines axialen Bereichs der Kolbenstange, wobei eine radiale Magnetfeldkomponente des permanenten Magnetfelds in Abhängigkeit von einer axialen Position einen streng monotonen Verlauf mit einem von Null verschiedenen, insbesondere konstanten, Gradienten aufweist, um eine umkehrbar eindeutige Zuordnung zwischen der radialen Komponente des Magnetfeldes und der axialen Position bereitzustellen; und Anordnen einer

Messeinheit zur Messung der radialen Magnetfeldkomponente der Kolbenstange außerhalb des Arbeitszylinders an einem Endbereich des Arbeitszylinders, an dem die Kolbenstange aus dem Arbeitszylinder hervorsteht, wobei die Messeinheit insbesondere als Zusatzmodul ausgebildet ist, das an dem Endbereich des Arbeitszylinders montiert wird.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine Ausführungsform des erfindungsgemäßen Systems.
- Fig. 2: zeigt eine Querschnittsdarstellung des erfindungsgemäßen Systems gemäß Fig. 1.
- Fig. 3: zeigt eine erfindungsgemäß magnetisierte Kolbenstange.
- Fig. 4: zeigt die Magnetisierung einer ferromagnetischen Kolbenstange.
- Fig. 5: zeigt die Magnetfeldkomponenten während der Magnetisierung der Stange.
- Fig. 6: zeigt eine Magnetfeldsensoranordnung.
- Fig. 7: zeigt ein Messsignal des erfindungsgemäßen Systems.

### Ausführungsformen

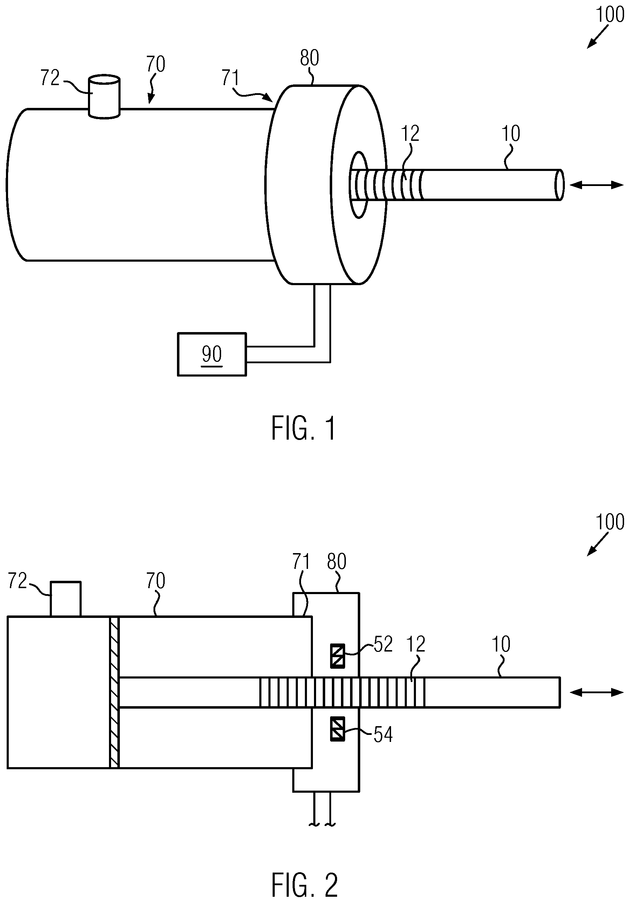

Figur 1 zeigt eine Ausführungsform des erfindungsgemäßen Systems.

Das erfindungsgemäße System 100 umfasst einen Arbeitszylinder 70 mit einer innerhalb des Arbeitszylinders 70 vorgesehenen Kolbenstange 10, wobei die Kolbenstange 10 innerhalb des Arbeitszylinders 70 axial bewegbar ist. Das erfindungsgemäße System 100 ist dadurch gekennzeichnet, dass die Kolbenstange 10 ein permanentes Magnetfeld innerhalb eines axialen Bereichs 12 der Kolbenstange 10 aufweist, wobei eine radiale Magnetfeldkomponente des permanenten Magnetfelds in Abhängigkeit von einer axialen Position einen von Null verschiedenen, insbesondere einen konstanten Gradienten aufweist, und durch eine Messeinheit 80 zur Messung der radialen Magnetfeldkomponente der Kolbenstange 10, wobei die Messeinheit 80 außerhalb des Arbeitszylinders 70 vorgesehen ist. Die Bewegungsrichtung (auch axiale Richtung) der Kolbenstange 10 ist durch den Doppelpfeil angedeutet.

Die Messeinheit 80 ist zur Messung der radialen Magnetfeldkomponente eines außerhalb des Arbeitszylinders 70 befindlichen Teils des axialen Bereichs 12 der Kolbenstange 10 vorgesehen. Die Messeinheit 80 ist an einem Endbereich 71 des Arbeitszylinders 70, an dem die Kolbenstange 10 des Arbeitszylinders 70 aus dem Arbeitszylinder 70 hervorsteht, angeordnet. Die Messeinheit 80 ist als Zusatzmodul ausgebildet, das an dem Endbereich 71 des Arbeitszylinders 70 montiert ist. In diesem Beispiel ist die Messeinheit 80 auf den Arbeitszylinder 70 aufgesteckt, und sie kann zur räumlichen Fixierung mit dem Arbeitszylinder 70 verschraubt werden.

Der Arbeitszylinder 70 ist in diesem Beispiel ein Hydraulikzylinder mit einem Anschluss 72 für Hydrauliköl. Der Arbeitszylinder kann jedoch alternativ dazu ein Pneumatikzylinder oder ein Elektrozylinder sein. Die erfindungsgemäße Erfassung der axialen Position ist von der konkreten Bauart des Arbeitszylinders unabhängig.

Die Messeinheit 80 ist zur Bestimmung einer axialen Lage der Kolbenstange 10 relativ zum Arbeitszylinder 70 ausgebildet. Falls erforderlich, kann die Messeinheit 70 auch zur Bestimmung einer Geschwindigkeit der Kolbenstange 10 relativ zum Arbeitszylinder 70 ausgebildet sein, indem die erfasste Positionsänderung (axiale Lageänderung) mit der Zeit ausgewertet wird.

Das System kann eine Auswerteeinheit 90 umfassen, wobei die Auswerteeinheit 90 dazu ausgebildet ist, aus Messsignalen von der Messeinheit 80 eine axiale Lage der Kolbenstange 10 relativ zum Arbeitszylinder 70 und/oder eine Geschwindigkeit der Kolbenstange 10 relativ zum Arbeitszylinder 70 zu bestimmen, wobei die Auswerteeinheit 90 und die Messeinheit 80 kommunikativ miteinander gekoppelt sind, insbesondere verdrahtet oder drahtlos verbunden sind.

Figur 2 zeigt eine Querschnittsdarstellung des erfindungsgemäßen Systems 100 gemäß Figur 1. Darin sind Messspulen 52, 54 der Messeinheit 80 dargestellt, die das radiale Magnetfeld des axialen Bereichs 12 der Kolbenstange 10 erfassen. Die Messspulen 52, 54 sind dabei in einem vorbestimmten Abstand von dem Endbereich 71 bzw. von dessen Endfläche vorgesehen. Dadurch können magnetische Störeinflüsse des Arbeitszylinders 70 auf das gemessene Magnetfeld unter einen vorbestimmten Betrag reduziert werden.

Das System 100 kann beispielsweise ein absoluter linearer Positionsgeber sein, wobei der Arbeitszylinder 70 ein Achs- bzw. Lenkzylinder ist.

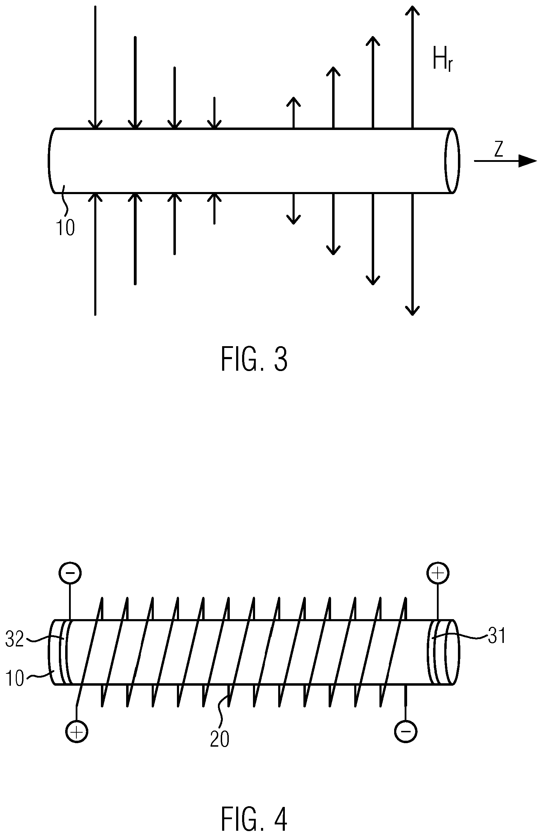

Figur 3 zeigt eine Ausführungsform der erfindungsgemäßen magnetisierten Kolbenstange 10, wobei eine radiale Komponente des Magnetfelds der Kolbenstange innerhalb eines axialen Bereichs der Stange in Abhängigkeit von der axialen Position streng monoton variiert, insbesondere linear variiert. Mit anderen Worten, eine radiale Komponente des Magnetfelds der Kolbenstange (gemessen in r-Richtung) weist innerhalb eines axialen Bereichs der Kolbenstange (in z-Richtung) in Abhängigkeit von der axialen Position einen von Null verschiedenen Gradienten auf, insbesondere einen konstanten Gradienten. Dabei ist zu beachten, dass die radiale Magnetfeldkomponente nach außen (von der Kolbenstange weg) oder nach innen (zur Kolbenstange hin) zeigen kann, so dass also die radiale Magnetfeldkomponente mit einem Vorzeichen behaftet ist.

Erfindungsgemäß soll die eine Positionsmessung mit der magnetisierten Kolbenstange 10 erfolgen, wobei lediglich die radiale Magnetfeldkomponente erfasst wird. In Zylinderkoordinatensystem (r, ϕ, z) liegt die zentrale Achse der Kolbenstange (Symmetrieachse) in z-Richtung, der Radius r wird senkrecht zur z-Achse gemessen, und der Winkel ϕ wird in Umfangsrichtung um die z-Achse in Bezug auf eine vorgegebene Richtung senkrecht zur z-Achse gemessen.

Somit gibt es einen umkehrbar eindeutigen Zusammenhang zwischen der radialen Magnetfeldkomponente Hᵣ und der axialen Position z, der für eine Positionsmessung eingesetzt werden kann.

In Figur 4 zeigt den Vorgang zur Magnetisierung einer ferromagnetischen Kolbenstange zum Ausführen des erfindungsgemäßen Verfahrens.

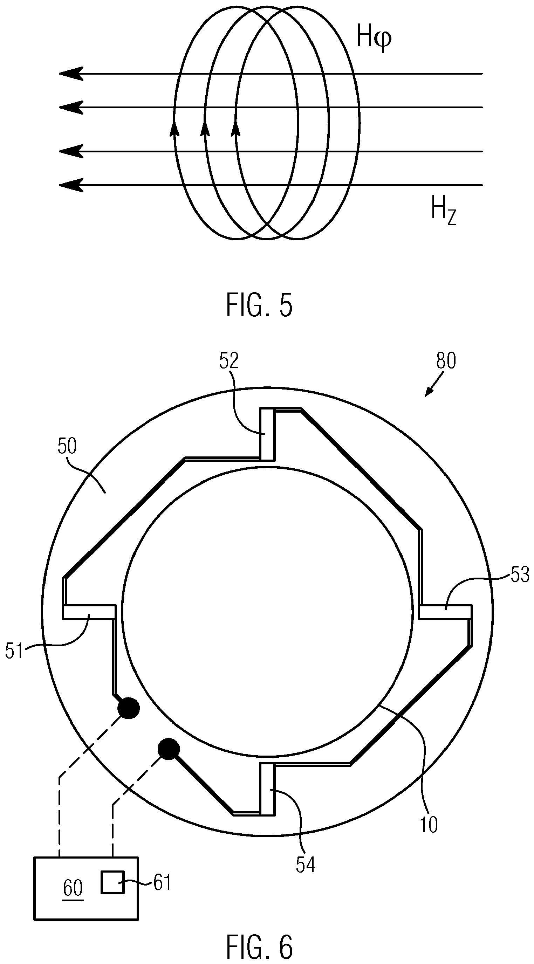

Dabei wird zeitgleich zum einen mit einer Spule 20 um die ferromagnetische Kolbenstange 10 ein Magnetfeld in Längsrichtung der Stange (z-Achse) erzeugt und zum anderen durch einen Stromfluss in der Kolbenstange 10 in z-Richtung (oder in negativer z-Richtung) ein Magnetfeld in Umfangsrichtung (ϕ-Richtung) erzeugt. Diese Magnetfeldkomponenten H_{z} und H_{ϕ} sind in Figur 5 dargestellt. Der Stromfluss durch die Kolbenstange 10 wird über zwei daran angeordnete Kontakte 31, 32 und einer zwischen den Kontakten 31, 32 anliegenden Spannung bewirkt. Aufgrund der Magnetisierung der ferromagnetischen Kolbenstange 10 wird dabei auch eine remanente radiale Magnetfeldkomponente (Hᵣ in Figur 3) erzeugt.

Der Stromfluss (bzw. die angelegte Spannung) kann dabei vorzugsweise pulsierend erfolgen. Auf diese Weise kann (kurzfristig) ein sehr hoher Strom mit einem entsprechend hohen Magnetfeld erzeugt werden (die Stärke des axialen Feldes durch die Spule kann dagegen z.B. auch durch die Wicklungszahl eingestellt werden). Die gepulste Magnetisierung von Wellen zur Nutzung in der magnetostriktiven Messtechnik für die Drehmomentmessung ist z.B. in EP 1774271 B1 und EP 1902287 B1 beschrieben. Dieses Verfahren ist unter der Bezeichnung "Puls Current Magnetic Encoding (PCME)" bekannt. Dabei wird eine Außenkontaktierung an zwei voneinander beabstandeten Stellen der Welle zwischen den eine Magnetisierung erfolgen soll vorgenommen und ein Strompuls in axialer Richtung der Welle erzeugt, der durch das dabei entstehende Magnetfeld die Welle in Umfangsrichtung magnetisiert. Die Magnetisierung erfolgt dabei im Wesentlichen in einer oberflächennahen Schicht.

Nach erfolgter Magnetisierung und damit einhergehender Bereitstellung einer radialen Magnetfeldkomponente kann deren Gradient durch einen teilweisen Entmagnetisierungsvorgang reduziert werden. Dazu wird eine Spule (z.B. die Spule 20) um die Kolbenstange mit einer Wechselspannung versorgt und optional über den magnetisierten Bereich bewegt.

Figur 6 zeigt eine Messeinheit 80 zur Positionsmessung. Die Messeinheit 80 umfasst eine Magnetfeldsensoranordnung mit einer Anordnung von elektrischen Messspulen 51-54. Weiterhin ist eine Schaltung 60 mit einem elektrischen Schwingkreis 61 vorgesehen. Alternativ dazu kann die Messung der Magnetfeldänderung auch mittels magnetoresistiver Technologien erfolgen (GMR-, TMR, AMR-Sensoren). Die Messspulen 51-54 sind auf einer Platine 50 angeordnet, die eine kreisförmige Öffnung aufweist, in der die Kolbenstange 10 bewegbar angeordnet ist. Die Positionsmessung ergibt die absolute Lage zwischen Kolbenstange 10 und den Messspulen 51-54 in Längsrichtung der Kolbenstange 10. Weil die Messeinheit 80 in Bezug auf den Arbeitszylinder 70 ortsfest angeordnet ist, ergibt sich somit auch eine Positionsmessung der Kolbenstange 10 in Bezug auf den Arbeitszylinder 70.

Die Messspulen 51-54 sind derart angeordnet, dass der Einfluss des radialen Magnetfeldes in jeder Spule gleichartig ist. Insbesondere sind alle Messspulen 51-54 entweder linkssinnig oder rechtssinnig gewickelt. Die vier Messspulen 51-54 sind in einem Winkelabstand von 90° zueinander in Umfangsrichtung um die Kolbenstange 10 auf der Platine angeordnet. Die Verschaltung der Messspulen 51-54 miteinander ist derart, dass eine Verbindungsleitung zwischen zwei der Messspulen 51-54 die radial außen liegende Seite einer Messspule (z.B. 51) mit der innen liegenden Seite einer benachbarten Messspule (z.B. 52) verbindet bzw. umgekehrt. Dies hat insbesondere den Vorteil, dass Einflüsse durch ein äußeres Magnetfeld kompensiert werden, da beispielsweise in den Spulen 51 und 53 die Wirkung des äußeren Magnetfelds entgegengesetzt zueinander ist.

Um eine möglichst große radiale Magnetfeldkomponente nutzen zu können werden die Messspulen 51-54 möglichst nahe an der Oberfläche der Kolbenstange 10 (jedoch nicht in Kontakt damit) angeordnet. Der Abstand der Messspulen 51-54 von der Oberfläche der Kolbenstange 10 kann beispielsweise kleiner als der Durchmesser der Stange sein, vorzugsweise ist dieser Abstand kleiner als 30% des Durchmessers, höchst vorzugsweise kleiner als 10% des Durchmessers. Weiterhin ist die Ausdehnung der Messspulen (in der erfindungsgemäßen Anordnung in radialer Richtung) klein im Vergleich zum Durchmesser der magnetisierten Stange.

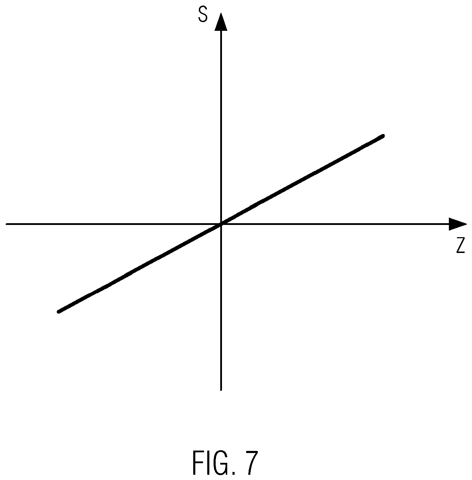

Figur 7 zeigt ein Messsignal der erfindungsgemäßen Vorrichtung. Das Messsignal S ist abhängig von der relativen Position z der Messspulen linear und ergibt somit einen direkten Zusammenhang von gemessenem Signal S zur Position z.

Die dargestellten Ausführungsformen sind lediglich beispielhaft und der vollständige Umfang der vorliegenden Erfindung wird durch die Ansprüche definiert.

## Patentansprüche

1. System (100), umfassend:
einen Arbeitszylinder (70);
eine innerhalb des Arbeitszylinders vorgesehene Kolbenstange (10), wobei die Kolbenstange innerhalb des Arbeitszylinders axial bewegbar ist; und
wobei die Kolbenstange ein permanentes Magnetfeld innerhalb eines axialen Bereichs (12) der Kolbenstange aufweist; und
eine Messeinheit (80) zur Messung einer radialen Magnetfeldkomponente der Kolbenstange, wobei die Messeinheit außerhalb des Arbeitszylinders vorgesehen ist;
**dadurch gekennzeichnet, dass**
die radiale Magnetfeldkomponente des permanenten Magnetfelds in Abhängigkeit von einer axialen Position einen streng monotonen Verlauf mit einem von Null verschiedenen, insbesondere konstanten, Gradienten aufweist, wodurch eine umkehrbar eindeutige Zuordnung zwischen der radialen Komponente des
Magnetfeldes und der axialen Position bereitgestellt wird,
wobei der axiale Bereich (12) der einzige Bereich der Kolbenstange ist, der den obengenannten streng monotonen Magnetfeldverlauf aufweist.

2. System nach Anspruch 1, wobei die Messeinheit zur Messung der radialen Magnetfeldkomponente eines außerhalb des Arbeitszylinders befindlichen Teils des axialen Bereichs der Kolbenstange vorgesehen ist, wobei die Messung insbesondere in einem vorbestimmten axialen Abstand von dem Arbeitszylinder erfolgt.

3. System nach Anspruch 1 oder 2, wobei die Messeinheit an einem Endbereich (71) des Arbeitszylinders, an dem die Kolbenstange aus dem Arbeitszylinder hervorsteht, angeordnet ist.

4. System nach Anspruch 3, wobei die Messeinheit als Zusatzmodul ausgebildet ist, das an dem Endbereich des Arbeitszylinders montierbar ist, insbesondere aufsteckbar und/oder verschraubbar ist.

5. System nach einem der Ansprüche 1 bis 4, wobei der Arbeitszylinder ein Hydraulikzylinder, ein Pneumatikzylinder oder ein Elektrozylinder ist.

6. System nach einem der Ansprüche 1 bis 5, wobei die Messeinheit weiterhin zur Bestimmung einer axialen Lage der Kolbenstange relativ zum Arbeitszylinder und/oder zur Bestimmung einer Geschwindigkeit der Kolbenstange relativ zum Arbeitszylinder ausgebildet ist.

7. System nach einem der Ansprüche 1 bis 5, weiterhin eine Auswerteeinheit (90) umfassend, wobei die Auswerteeinheit dazu ausgebildet ist, aus Messsignalen von der Messeinheit eine axiale Lage der Kolbenstange relativ zum Arbeitszylinder und/oder eine Geschwindigkeit der Kolbenstange relativ zum Arbeitszylinder zu bestimmen, wobei die Auswerteeinheit und die Messeinheit kommunikativ miteinander gekoppelt sind, insbesondere verdrahtet oder drahtlos verbunden sind.

8. System nach einem der Ansprüche 1 bis 7, wobei die radiale Magnetfeldkomponente in Abhängigkeit von der Position in Umfangsrichtung um die Kolbenstange bei einem konstanten radialen Abstand von der Kolbenstange konstant ist.

9. System nach einem der Ansprüche 1 bis 8, wobei die Messeinheit wenigstens einen Magnetfeldsensor (51-54) zur Ausgabe eines von der radialen Magnetfeldkomponente abhängenden Signals umfasst.

10. System nach Anspruch 9, wobei jeder Magnetfeldsensor eine elektrische Messspule (51-54) umfasst, und in einem elektrischen Schwingkreis verschaltet ist; oder wobei jeder Magnetfeldsensor einen GMR-, TMR- oder AMR-Sensor umfasst.

11. System nach Anspruch 9 oder 10, wobei eine Anzahl N von Magnetfeldsensoren in einem gleichmäßigen Winkelabstand von 360°/N um die Kolbenstange vorgesehen sind, insbesondere wobei zwei Magnetfeldsensoren in Bezug auf die Achse der Kolbenstange gegenüberliegend angeordnet sind oder wobei vier Magnetfeldsensoren in einem jeweiligen Winkelabstand von 90° in Umfangsrichtung der Kolbenstange angeordnet sind, wobei vorzugsweise der radiale Abstand der einzelnen Magnetfeldsensoren von der Kolbenstange für alle Magnetfeldsensoren gleich ist.

12. System nach Anspruch 11, wobei die Magnetfeldsensoren so miteinander verschaltet sind, dass sich die jeweils ausgegebenen Signale aufgrund der jeweils gemessenen radialen Magnetfeldkomponenten addieren, und/oder wobei die Magnetfeldsensoren so miteinander verschaltet sind, dass zwei gegenläufige Signale ausgegeben werden, so dass bei einer Bewegung der Kolbenstange in eine erste Richtung ein erstes Signal größer wird und ein zweites Signal kleiner wird bzw. bei einer Bewegung in eine zweite Richtung, die der ersten Richtung entgegengesetzt ist, das erste Signal kleiner wird und das zweite Signal größer wird.

13. Verwendung eines Systems gemäß einem der Ansprüche 1 bis 12, wobei die Verwendung umfasst: Positionieren, Heben, Senken oder Verschieben von Lasten; Bestimmen eines Lenkwinkels in einem Fahrzeug, wobei der Arbeitszylinder ein Lenkzylinder des Fahrzeugs ist; Verwendung in einer stationären oder einer mobilen Vorrichtung.

14. Verfahren zum Bereitstellen eines Systems nach einem der Ansprüche 1 bis 12, umfassend die Schritte:
Modifizieren eines Arbeitszylinders (70) mit einer Kolbenstange (10), um eine Bestimmung einer axialen Lage der Kolbenstange relativ zum Arbeitszylinder und/oder eine Bestimmung einer Geschwindigkeit der Kolbenstange relativ zum Arbeitszylinder bereitzustellen, wobei das Modifizieren umfasst:
Magnetisieren der Kolbenstange mit einem permanenten Magnetfeld innerhalb eines axialen Bereichs (12) der Kolbenstange, wobei eine radiale Magnetfeldkomponente des permanenten Magnetfelds in Abhängigkeit von einer axialen Position einen streng monotonen Verlauf mit einem von Null verschiedenen, insbesondere konstanten, Gradienten aufweist, um eine umkehrbar eindeutige Zuordnung zwischen der radialen Komponente des Magnetfeldes und der axialen Position bereitzustellen;
Anordnen einer Messeinheit (80) zur Messung der radialen Magnetfeldkomponente der Kolbenstange außerhalb des Arbeitszylinders an einem Endbereich (71) des Arbeitszylinders, an dem die Kolbenstange aus dem
Arbeitszylinder hervorsteht, wobei die Messeinheit insbesondere als Zusatzmodul ausgebildet ist, das an dem Endbereich des Arbeitszylinders montiert wird.

## Claims

1. A system (100) comprising:
a working cylinder (70);
a piston rod (10) provided inside the working cylinder, wherein the piston rod is axially movable within the working cylinder; and
wherein the piston rod includes a permanent magnetic field within an axial region (12) of the piston rod; and
a measuring unit (80) for measuring a radial magnetic field component of the piston rod, the measuring unit being provided outside the working cylinder;
**characterized in that**
the radial magnetic field component of the permanent magnetic field has a strictly monotonic behaviour with a non-zero, in particular, constant gradient as a function of an axial position so that a one-to-one relationship between the radial component of the magnetic field and the axial position is provided, wherein the axial region (12) is the only region of the piston rod having said strictly monotonic magnetic field distribution.

2. The system according to claim 1, wherein the measuring unit is provided for measuring the radial magnetic field component of a portion of the axial region of the piston rod outside the working cylinder and the measurement is performed in particular at a predetermined axial distance from the working cylinder.

3. The system according to claims 1 or 2, wherein the measuring unit is positioned at an end portion (71) of the working cylinder where the piston rod protrudes from the working cylinder.

4. The system according to claim 3, wherein the measuring unit is configured as an add-on module that can be mounted to the end portion of the working cylinder, in particular by fitting or screwing.

5. The system according to any one of claims 1 to 4, wherein the working cylinder is one of a hydraulic cylinder, a pneumatic cylinder, or an electric cylinder.

6. The system according to any one of claims 1 to 5, wherein the measuring unit is further configured for determining a relative axial position of the piston rod to the working cylinder and/or for determining a relative speed of the piston rod to the working cylinder.

7. The system according to any one of claims 1 to 5, further comprising an analyzing unit (90), the analyzing unit being configured for determining a relative axial position of the piston rod to the working cylinder and/or a relative speed of the piston rod to the working cylinder based on measurement signals from the measuring unit, wherein the analyzing unit and the measuring unit are coupled in communication with each other, in particular connected by wire or wirelessly.

8. The system according to any one of claims 1 to 7, wherein the radial magnetic field component is constant with a constant radial spacing from the piston rod around the circumference thereof.

9. The system according to any one of claims 1 to 8, wherein the measuring unit comprises at least a magnetic field sensor (51-54) for outputting a signal as a function of the radial magnetic field component.

10. The system according to claim 9, wherein each magnetic field sensor comprises an electrical sensing coil (51-54) and is connected to an electric resonant circuit or wherein each magnetic field sensor comprises a GMR, TMR, or AMR sensor.

11. The system according to any of claims 9 to 10, wherein a number N of magnetic field sensors are provided at a uniform angular c of 360°/N around the piston rod, wherein, in particular, two magnetic field sensors are arranged facing each other across the axis of the piston rod or wherein four magnetic field sensors are arranged at a respective angular interval of 90° in the circumferential direction of the piston rod, preferably wherein the radial distance of the individual magnetic field sensors from the piston rod is uniform for all magnetic field sensors.

12. The system according to claim 11, wherein the magnetic field sensors are interconnected such that the respective output signals based on the respective measured radial magnetic field components add up and/or wherein the magnetic field sensors are interconnected such that two opposite signals are output whereby, when the piston rod moves in a first direction, a first signal becomes larger and a second signal becomes smaller, or when the piston rod moves in a second direction opposite to the first direction, the first signal becomes smaller and the second signal becomes larger.

13. Use of a system according to any one of claims 1 to 12, wherein the use comprises: positioning, raising, lowering or shifting loads; determining a steering angle in a vehicle, wherein the working cylinder is a steering cylinder of the vehicle; using in a stationary or a mobile device.

14. A method of providing a system according to any one of claims 1 to 12, comprising the steps of:
modifying a working cylinder (70) having a piston rod (10) allowing to determine a relative axial position of the piston rod to the working cylinder and/or to determine a relative speed of the piston rod to the working cylinder, wherein modifying comprises:
magnetizing the piston rod with a permanent magnetic field within an axial region (12) of the piston rod, wherein a radial magnetic field component of the permanent magnetic field has a strictly monotonic behaviour with a non-zero, in particular constant gradient as a function of an axial position so that a one-to-one relationship between the radial component of the magnetic field and the axial position is provided;
placing a measuring unit (80) for measuring the radial magnetic field component of the piston rod outside the working cylinder at an end portion (71) of the working cylinder where the piston rod protrudes from the working cylinder, wherein the measuring unit is configured in particular as an add-on module that is mounted to the end portion of the working cylinder.

## Revendications

1. Système (100), comprenant :
un cylindre de travail (70) ;
une tige de piston (10) prévue à l'intérieur du cylindre de travail, dans lequel la tige de piston peut être déplacée axialement dans le cylindre de travail ; et
dans lequel la tige de piston présente un champ magnétique permanent à l'intérieur d'une région axiale (12) de la tige de piston ; et
une unité de mesure (80) pour mesurer une composante de champ magnétique radiale de la tige de piston, dans lequel l'unité de mesure est prévue à l'extérieur du cylindre de travail ; **caractérisé en ce que** :
la composante de champ magnétique radiale du champ magnétique permanent présente, en fonction d'une position axiale, un tracé strictement monotone avec un gradient différent de zéro, en particulier constant, ce qui permet une association réversible univoque entre la composante de champ magnétique radiale et la position axiale,
dans lequel la région axiale (12) est la seule région de la tige de piston qui présente le tracé de champ magnétique strictement monotone mentionné ci-dessus.

2. Système selon la revendication 1, dans lequel l'unité de mesure est prévue pour mesurer la composante de champ magnétique radiale d'une partie de la région axiale de la tige de piston située à l'extérieur du cylindre de travail, la mesure étant effectuée en particulier à une distance axiale prédéterminée du cylindre de travail.

3. Système selon la revendication 1 ou 2, dans lequel l'unité de mesure est agencée au niveau d'une région d'extrémité (71) du cylindre de travail au niveau de laquelle la tige de piston fait saillie à partir du cylindre de travail.

4. Système selon la revendication 3, dans lequel l'unité de mesure est réalisée sous la forme d'un module supplémentaire qui peut être monté au niveau de la région d'extrémité du cylindre de travail, en particulier qui peut être enfiché et/ou vissé.

5. Système selon l'une quelconque des revendications 1 à 4, dans lequel le cylindre est un cylindre hydraulique, un cylindre pneumatique ou un cylindre électrique.

6. Système selon l'une quelconque des revendications 1 à 5, dans lequel l'unité de mesure est en outre conçue pour déterminer une position axiale de la tige de piston par rapport au cylindre de travail et/ou pour déterminer une vitesse de la tige de piston par rapport au cylindre de travail.

7. Système selon l'une quelconque des revendications 1 à 5, comprenant en outre une unité d'évaluation (90), l'unité d'évaluation étant conçue pour déterminer, à partir de signaux de mesure provenant de l'unité de mesure, une position axiale de la tige de piston par rapport au cylindre de travail et/ou une vitesse de la tige de piston par rapport au cylindre de travail, l'unité d'évaluation et l'unité de mesure étant couplées l'une à l'autre en communication, en particulier étant câblées ou connectées sans fil.

8. Système selon la revendication 1 à 7, dans lequel la composante de champ magnétique radiale est constante à une distance radiale constante de la tige de piston dans la direction circonférentielle autour de la tige de piston en fonction de la position.

9. Système selon l'une quelconque des revendications 1 à 8, dans lequel l'unité de mesure comprend au moins un capteur de champ magnétique (51-54) pour délivrer un signal en fonction de la composante de champ magnétique radiale.

10. Système selon la revendication 9, dans lequel chaque capteur de champ magnétique comprend une bobine de mesure électrique (51-54) et est connecté dans un circuit oscillant électrique ; ou dans lequel chaque capteur de champ magnétique comprend un capteur GMR, TMR ou AMR.

11. Système selon la revendication 9 ou 10, dans lequel un nombre N de capteurs de champ magnétique sont prévus avec un écart angulaire régulier de 360°/N autour de la tige de piston, en particulier dans lequel deux capteurs de champ magnétique sont agencés mutuellement en vis-à-vis par rapport à l'axe de la tige de piston, ou dans lequel quatre capteurs de champ magnétique sont agencés avec un écart angulaire respectif de 90° dans la direction circonférentielle de la tige de piston, dans lequel la distance radiale entre les capteurs de champ magnétique individuels et la tige de piston est de manière préférée la même pour tous les capteurs de champ magnétique.

12. Système selon la revendication 11, dans lequel les capteurs de champ magnétique sont connectés mutuellement de telle sorte que les signaux respectivement émis s'additionnent en raison des composantes de champ magnétique radiales respectivement mesurées, et/ou dans lequel les capteurs de champ magnétique sont connectés mutuellement de telle sorte que deux signaux opposés sont émis de telle sorte que, lorsque la tige de piston se déplace dans une première direction, un premier signal devient plus grand et un second signal devient plus petit, respectivement, ou lorsqu'elle se déplace dans une seconde direction opposée à la première direction, le premier signal devient plus petit et le second signal devient plus grand.

13. Utilisation d'un système selon l'une quelconque des revendications 1 à 12, dans laquelle l'utilisation comprend les étapes consistant à : positionner, lever, abaisser ou déplacer des charges ; déterminer un angle de direction dans un véhicule, dans laquelle le cylindre de travail est un cylindre de direction du véhicule ; utiliser dans un dispositif fixe ou mobile.

14. Procédé de fourniture d'un système selon l'une quelconque des revendications 1 à 12, comprenant les étapes consistant à :
modifier un cylindre de travail (70) avec une tige de piston (10) pour fournir une détermination d'une position axiale de la tige de piston par rapport au cylindre de travail et/ou une détermination d'une vitesse de la tige de piston par rapport au cylindre de travail, la modification comprenant les étapes consistant à :
magnétiser la tige de piston avec un champ magnétique permanent à l'intérieur d'une région axiale (12) de la tige de piston, une composante de champ magnétique radiale du champ magnétique permanent présentant, en fonction d'une position axiale, un tracé strictement monotone avec un gradient différent de zéro, en particulier constant, afin de fournir une association univoque réversible entre la composante radiale du champ magnétique et la position axiale ;
agencer une unité de mesure (80) pour mesurer la composante de champ magnétique radiale de la tige de piston à l'extérieur du cylindre de travail au niveau d'une région d'extrémité (71) du cylindre de travail au niveau de laquelle la tige de piston fait saillie hors du cylindre de travail, l'unité de mesure étant réalisée en particulier sous la forme d'un module supplémentaire qui est monté sur la région d'extrémité du cylindre de travail.
